# EUROPEAN PATENT SPECIFICATION

(11) **EP 0 516 013 B1**
(45) Date of publication and mention of the grant of the patent: **08.01.1997**
(21) Application number: 92108774.8
(22) Date of filing: 25.05.1992
(51) Int. Cl.: B62M 3/08

(54) **Bicycle pedal system having variable tread surfaces**
Vorrichtung für Fahrradpedale mit variabler Tretfläche
Dispositif pour une pédale de bicyclette avec surface de la pédale variable

(30) Priority: 30.05.1991 JP 127077/91; 19.06.1991 JP 147018/91
(43) Date of publication of application: 02.12.1992
(73) Proprietor: SHIMANO INC., Osaka (JP)
(72) Inventor: Nagano, Masashi, Izumi-shi, Osaka (JP)
(74) Representative: Säger, Manfred, Dipl.-Ing.

(56) References cited:
- EP-A- 0 015 803
- EP-A- 0 155 114
- EP-A- 0 349 986
- DE-A- 3 329 993

## Description

The present invention relates to an adapter attachable to a bicycle pedal having tread surfaced adaptable to cleat shoes and to ordinary shoes.

Conventionally, when the cyclist wears shoes with cleats attached thereto for pedaling a bicycle, pedals having tread surface with cleat engaging devices are attached to the crankset (EP-0 428 140 A1). When the cyclist wears ordinary shoes without cleats for pedaling the bicycle, pedals having antislip devices instead of the cleat engaging devices which are attached to the crankset since ordinary shoes tend to slip on the pedals for engaging cleats. Thus depending on the types of shoes worn by the cyclist, the different types of pedals are selectively used. Where the above-mentioned two types of shoes are selectively worn, it is necessary to have the two types of pedals available and to attach an appropriate type of pedals to the crankset.

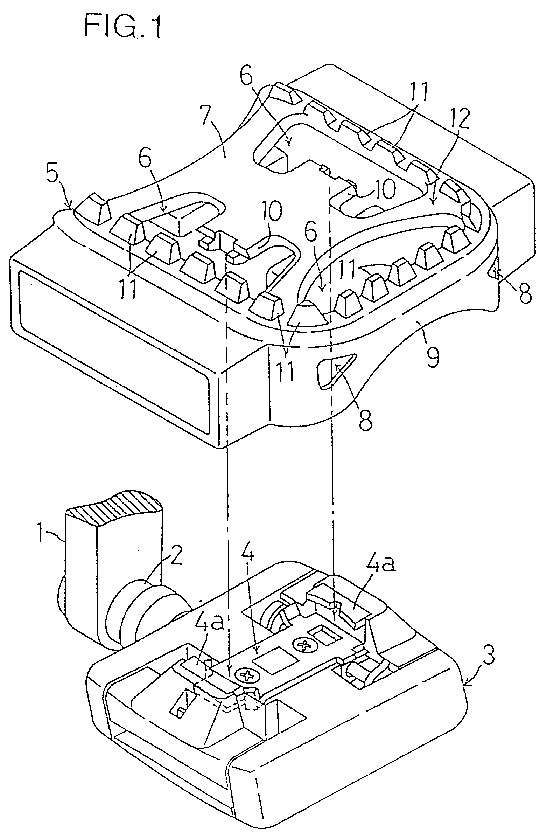

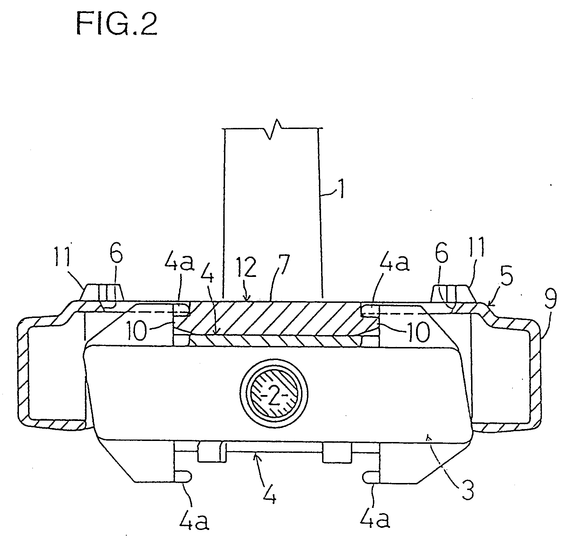

There is known an adapter for a bicycle pedal (EP-0 155 144 A2), which allows the cyclist to use cleat shoes (Fig 1,2) or ordinary shoes (Fig 16). When the cyclist wears cleat shoes an adapter can also be attached to a conventional pedal. The adapter (fig. 15) includes a mounting plate and also a flange adjustably connected to this mounting plate by bolts or other similar fastening mechanisms. The mounting plate and flange include sideholes. Bolts pass through either these sideholes and aligned holes in the pedal to secure the adapter to the pedal. If the cyclist changes the type of the shoes, it is necessary to attach to or to release the adapter from the pedal by using tools. If he changes his shoes from ordinary shoes to cleat shoes, the connecting of the adapter to the pedal is very difficult, since the position of the adapter on the pedal is to be adjusted. This results in waste of time for the cyclist and it is also very disagreable for him. According to another embodiment (Fig. 16) there is an adapter engageable directly with a known pedal having a cleat engagement device and presenting an upper plate portion suited to supporting a normal shoe attachable by means of straps.

Further adapters with cleat like engageable portions in order to be used with cleat engaging devices of a pedal are known (EP-0 349 986 A2). With this known adapter a normal shoe can be used; however this shoe normally comprises a groove which is cooperating with a protusion of the adapter. Therefore not any normal shoe can be used but it must be adapted in order to cooperate with the protusion of the adapter. But it is clear, that this protusion corresponds to the rear cross-piece of any conventionable pedal and that - when using such pedals - these cross-pieces serve, according to the type of shoe worn, either to support the sole of a normal shoe or to engage a block presenting a simple groove on the bottom of a traditional cycling shoe.

The provision of an adapter according to the invention allows the cyclist to select the tread surfaces formed on the pedal or the upper plate portion formed on the adapter according to the type of shoes the cyclist wears.

The present invention provides an adapter for a pedal having a tread surface with cleat engaging devices which may be attachable secured to the pedal through a simple mounting structure.

According to the invention an adapter is used which is attachable to a pedal for a cleat shoe to adapt the pedal for use with a normal shoe, said adapter comprising:
- an upper plate portion ;
- a first and a second engageable cleat-like portion for joint engagement by a cleat-engaging device of a pedal, each formed on said upper plate portion;
- an outer surface formed in said upper plate portion, said outer surface surrounding at a distance at least part of said first and second engageable portions, and comprising anti-slip projections, said outer surface defining a skirt portion extending downwardly therefrom,
- said first engageable portion extending towards the front of said adapter as a first projection and said second engageable portion extending towards the rear of said adapter as a second projection whereby said outer surface is formed at a level not lower than said first and second engageable portions.

### BRIEF DESCRIPTION OF THE DRAWINGS

Fig. 1 is a perspective view showing a relationship between a pedal for a cleat shoe used in a pedal system according to the present invention and an adapter attachable to the pedal, and
Fig. 2 is a sectional view of the adapter mounted on the pedal shown in Fig. 1,

### DETAILED DESCRIPTION OF THE PREFERRED EMBODIMENTS

Fig. 1 shows a pedal for a cleat shoe used in a pedal system according to the present invention and an adapter attachable to the pedal. As shown, a bicycle crank arm 1 rotatably supports a pedal body 3 through a pedal shaft 2. The pedal body 3 has opposite tread surfaces. Each tread surface includes a cleat coupling device 4 having a pair of cleat engaging metal hooks 4a disposed in a forward region and a rearward region thereof. Each of the two hooks 4a is pivotable between a lock position and a release position and biased to the lock position by a lock spring (not shown). This construction allows the cyclist to ride the bicycle with each shoe fixed to the pedal through a cleat. As is well known, the shoe is fixed to the pedal by depressing the cleat, and released from the pedal by displacing the cleat relative to the pedal.

As shown in Figs. 1 and 2, the cleat engaging hooks 4a may be used as an adapter coupling device for detachably securing an adapter 5 to the tread surface of the pedal. This adapter 5 includes a tread surface suited to an ordinary shoe as described later. With the adapter 5 mounted in position, the pedal is converted to a pedal suitable to an ordinary shoe without a cleat and capable of preventing slips of the shoe.

As shown in Fig. 1, the adapter 5 has a main adapter body formed of plastics and including an upper plate portion 7 defining a plurality of perforations 6, and a skirt portion 9 defining a plurality of perforations 8. The upper plate portion 7 includes a pair of couplings 10 formed centrally thereof for connection to the cleat engaging hooks 4a, and a multiplicity of projections 11 arranged peripherally of the upper plate portion 7.

As shown in Fig. 2, the adapter body is formed as a case for covering one of the tread surfaces of the pedal body 3. When the adapter body is placed on the pedal body 3, the couplings 10 in their approach to the cleat engaging hooks 4a cause the hooks 4a to pivot in releasing directions. Subsequently, the lock springs (not shown) cause the hooks 4a to return to the lock positions for engaging the couplings 10, respectively. The entire adapter is thereby secured to the pedal body 3 not to be readily releasable. With the skirt portion 9 surrounding and contacting sides of the pedal body 3, the adapter 5 is not movable relative to the pedal body 3 along the tread surface. Once the adapter 5 is mounted on the pedal, an outer surface 12 of the upper plate portion 7 acts as a shoe receiving tread surface lying above the cleat coupling device 4 on the tread surface of the pedal on which the adapter 5 is mounted. In this state, the projections 11 of the outer surface 12 act as an antislip device.

The entire adapter 5 is releasable from the pedal by disengaging the couplings 10 of the adapter body from the cleat engaging hooks 4a through movement similar to the well known operation to release the cleat from the pedal.

## Claims

1. An adapter (5) attachable to a pedal (3) for a cleat shoe to adapt the pedal (3) for use with a normal shoe, said adapter comprising:
- an upper plate portion (7);
- a first and a second engageable cleat-like portion (10) for joint engagement by a cleat-engaging device of a pedal, each formed on said upper plate portion (7);
- an outer surface (12) formed in said upper plate portion, said outer surface surrounding at a distance at least part of said first and second engageable portions (10), and comprising anti-slip projections (11), said outer surface defining a skirt portion (9) extending downwardly therefrom,
- said first engageable portion extending towards the front of said adapter (5) as a first projection and said second engageable portion extending towards the rear of said adapter (5) as a second projection whereby said outer surface is formed at a level not lower than said first and second engageable portions.

2. An adapter as claimed in claim 1, characterized in that the first projection is defined within the thickness of the upper plate portion (7) of said adapter (5).

3. An adapter as claimed in claim 1, characterized in that the second projection is defined within the thickness of the upper plate portion towards the rear of said adapter (5).

4. An adapter as claimed in claim 1, 2 or 3, characterized in that said outer surface (12) and said at least a part of said first and second engageable portions (10) form at least one perforation (6) therebetween.

5. An adapter as claimed in claim 1, 2, 3 or 4, characterized in that the anti-slip projections (11) are arranged peripherally of the upper plate portion (7).

6. An adapter as claimed in anyone of the claims 1 to 5, characterized in that the adapter body is formed caselike with said skirt portion (9) surronding the engageable portions (10).

7. An adapter as claimed in anyone of the claims 1 to 6, characterized in that the body is formed of plastics.

## Patentansprüche

1. Anpaßteil (5) zur Anbringung an einem Pedal (3) für einen Fahrradschuh mit Stoßplatte zur Anpassung des Pedals (3) zur Verwendung mit einem normalen Schuh, wobei das Anpaßteil folgendes aufweist:
- ein oberes Plattenteil (7);
- ein erstes und ein zweites stoßplattenähnliches und in Eingriff bringbares Teil (10) für den Verbindungseingriff einer Stoßplatteneingriffsvorrichtung an einem Pedal, wobei jedes der Teile auf dem oberen Plattenteil (7) ausgebildet ist;
- eine in dem oberen Plattenteil (7) ausgebildete Außenfläche (12), welche unter Einhaltung eines Abstands zumindest einen Teil des ersten und zweiten in Eingriff bringbaren Teils (10) umschließt und Gleitschutzvorsprünge (11) umfaßt, wobei an der Außenfläche ein sich von dieser aus nach unten erstreckender Randabschluß (9) ausgebildet ist,
- wobei sich das erste in Eingriff bringbare Teil zum vorderen Bereich des Anpaßteils (5) als erster Vorsprung hin erstreckt und das zweite in Eingriff bringbare Teil zum hinteren Bereich des Anpaßteils (5) als zweiter Vorsprung hin erstreckt, wodurch auf einer nicht unter der Höhe des ersten und des zweiten in Eingriff bringbaren Teils liegenden Höhe die Außenfläche gebildet wird.

2. Anpaßteil nach Anspruch 1, **dadurch gekennzeichnet**, daß der erste Vorsprung innerhalb der Dicke des oberen Plattenteils (7) des Anpaßteils (5) gebildet ist.

3. Anpaßteil nach Anspruch 1, **dadurch gekennzeichnet**, daß der zweite Vorsprung innerhalb der Dicke des oberen Plattenteils (7) zum rückwärtigen Bereich des Anpaßteils (5) hin ausgebildet ist.

4. Anpaßteil nach Anspruch 1, 2 oder 3, **dadurch gekennzeichnet**, daß die Außenfläche (12) und mindestens der umschlossene Teil des ersten und des zweiten in Eingriff bringbaren Teils (10) zumindestens eine dazwischenliegende Öffnung (6) bilden.

5. Anpaßteil nach Anspruch 1, 2, 3 oder 4, **dadurch gekennzeichnet**, daß die Gleitschutzvorsprünge (11) auf dem Umfang des oberen Plattenteils (7) angeordnet sind.

6. Anpaßteil nach einem der Ansprüche 1 bis 5, **dadurch gekennzeichnet**, daß der Korpus des Anpaßteils gehäuseartig ausgebildet ist und der Randabschluß (9) die in Eingriff bringbaren Teile (10) umschließt.

7. Anpaßteil nach einem der Ansprüche 1 bis 6, **dadurch gekennzeichnet**, daß der Korpus aus Kunststoffmaterial geformt ist.

## Revendications

1. Adaptateur (5) pouvant être fixé sur une pédale (3) pour chaussure à taquet afin d'adapter la pédale (3) pour qu'elle soit utilisée avec une chaussure normale, ledit adaptateur comprenant :
- une partie de plaque supérieure (7) ;
- une première et une seconde parties de prise (10) analogues à un taquet avec lesquelles un dispositif de prise de taquet d'une pédale peut venir en prise d'assemblage, chaque partie étant formée sur ladite partie de plaque supérieure (7) ;
- une surface extérieure (12) formée dans ladite partie de plaque supérieure, ladite surface extérieure entourant à une certaine distance au moins partiellement lesdites première et seconde parties de prise (10), et comprenant des protubérances anti-dérapantes (11), ladite surface extérieure délimitant une partie de jupe (9) qui en part vers le bas ;
- ladite première partie de prise s'étendant vers l'avant dudit adaptateur (5) en formant une première protubérance et ladite seconde partie de prise s'étendant vers l'arrière dudit adaptateur (5) en formant une seconde protubérance, grâce à quoi ladite surface extérieure est formée à un niveau qui n'est pas plus bas que lesdites première et seconde parties de prise.

2. Adaptateur selon la revendication 1, **caractérisé** en ce que la première protubérance est définie dans l'épaisseur de la partie de plaque supérieure (7) dudit adaptateur (5).

3. Adaptateur selon la revendication 1, **caractérisé** en ce que la seconde protubérance est définie dans l'épaisseur de la partie de plaque supérieure vers l'arrière dudit adaptateur (5).

4. Adaptateur selon l'une des revendications 1, 2 ou 3, **caractérisé** en ce que ladite surface extérieure (12) et ladite partie au moins desdites première et seconde parties de prise (10) forment entre elles au moins une perforation (6).

5. Adaptateur selon l'une des revendications 1, 2, 3 ou 4, **caractérisé** en ce que les protubérances anti-dérapantes (11) sont disposées sur la périphérie de la partie de plaque supérieure (7).

6. Adaptateur selon l'une quelconque des revendications 1 à 5, **caractérisé** en ce que le corps de l'adaptateur est construit en forme de caisson et ladite partie de jupe (9) entoure les parties de prise (10).

7. Adaptateur selon l'une quelconque des revendications 1 à 6, **caractérisé** en ce que le corps de l'adaptateur est constitué en matière plastique.
